# EUROPÄISCHE PATENTSCHRIFT

(11) **EP 0 481 292 B1**
(45) Veröffentlichungstag und Bekanntmachung des Hinweises auf die Patenterteilung: **03.08.1994**
(21) Anmeldenummer: 91116889.6
(22) Anmeldetag: 04.10.1991
(51) Int. Cl.: B60N 2/24

(54) **Sitz, der einzeln oder paarweise in Reihen in Fahrzeugen, insbesondere in Omnibussen angeordnet ist**
Seat which is arranged in single or double rows in vehicles, especially in buses
Siège, disposé en une seule ou en double rangée, dans des véhicules, en particulier des autobus

(30) Priorität: 05.10.1990 DE 4031596; 05.10.1990 DE 9013912 U
(43) Veröffentlichungstag der Anmeldung: 22.04.1992
(73) Patentinhaber: FRANZ KIEL GmbH, D-86720 Nördlingen (DE)
(72) Erfinder: Müller, Rolf, W-8660 Nördlingen (DE); Schmidt, Hermann, W-8861 Hürnheim Nr. 17 (DE)
(74) Vertreter: Glöser, Otto

(56) Entgegenhaltungen:
- EP-A- 0 229 625
- EP-A- 0 303 720
- EP-A- 0 336 852
- DE-U- 9 013 912
- FR-A- 2 326 164

## Beschreibung

Die Erfindung bezieht sich auf einen Sitz, der einzeln oder paarweise in Reihen in Fahrzeugen, insbesondere in Omnibussen angeordnet ist und dessen eigentlicher Sitz mit seiner neigungsverstellbaren Rückenlehne über Zwischenglieder auf einem quer zur Sitzrichtung verlaufenden, im vordersten Bereich des Sitzes untergebrachten Querträger eines im jeweiligen Fahrzeug verankerten Sitzuntergestelles aufgebaut ist. Ein Sitz dieser Art ist zum Beispeil durch die FR-A-2 326 164 bekannt.

Durch das Gebrauchsmuster DE-U-9 005 157.2 ist ein Sitz bekannt geworden, bei welchem der eigentliche Sitz auf einem etwa mittig angeordneten Querträger sitzt, der dem Sitzuntergestell angehört. Diese Bauart wurde deshalb gewählt, um für einen rückwärtigen Sitzbenutzer einen größeren Freiraum für die Füße zu gewinnen. Dies ist aber nur teilweise geglückt, weil der Rahmen des Sitzuntergestelles und die Verbindungsprofile zu dem Querträger in der Höhe Raum verbrauchen und außerdem der Rahmen des eigentlichen Sitzes weit nach hinten ragt und verhältnismäßig "eckig" in die Rückenlehnenkonstruktion übergeht, was für den rückwärts Sitzenden als unangenehm empfunden wird, da die eckigen Rohrübergänge eine schmerzfreie Bewegung der Beine in Frage stellen. Als nachteilig kommt auch noch hinzu, daß der eigentliche Sitz starr ist und nicht verstellt werden kann. Nebenbei sei erwähnt, daß der seitliche Anblick eines solchen Sitzes nicht besonders ansprechend ist.

Demgegenüber liegt der vorliegenden Erfindung die Aufgabe zugrunde, einen Sitz der eingangs erwähnten Art zu schaffen, der ein Höchstmaß an Beinfreiheit für die Benutzer rückwärtiger Sitze bietet, keine Gefahrenstellen, an denen man sich stoßen könnte, aufweist, das Platznehmen erleichtert und bequem in einen sogenannten Schlafsitz umwandelbar ist.

Gelöst wird diese Aufgabe dadurch, daß der Querträger des Sitzuntergestelles als Anlenk- oder Abstützbasis für den nach rückwärts auskragenden Sitz dient, indem der Querträger zwei voneinander beabstandete, im wesentlichen senkrecht stehende und symmetrisch zur Längsachse des Sitzes liegende Widerlagerplatten für Zwischenelemente zum Sitz trägt. Durch die Verlegung der Anlenk- und/oder Abstützbasis in den vordersten unteren Bereich eines Sitzes ist es möglich, starre und/oder bewegliche Zwischenelemente zwischen dem Sitz und dem Sitzuntergestell von dem rückwärtigen Bereich abgerückt anzuordnen, wodurch sich entscheidende Vorteile ergeben. Zum einen kommt der nahezu bei allen bekannten Sitzen zu beobachtende und gefährliche "eckige Übergang" des eigentlichen Sitzes in die Rückenlehne in Fortfall, d.h., es ist ein fließender Übergang gegeben, und zum anderen bleibt der Raum vor dem fließenden Übergang von Zwischenelementen frei, so daß sich für die Beine von rückwärts sitzenden Sitzbenutzern Freiräume ergeben, die bisher undenkbar waren. Darüber hinaus gibt es keine Stellen, an denen man sich empfindlich stoßen und/oder verletzen könnte. Diese besonderen Vorteile bleiben auch dann weitestgehend erhalten, wenn man den neuen Sitz nicht starr, sondern beweglich an der von den beiden Widerlagerplatten und den Querträgern gebildeten Basis anlenkt. Dies beruht vor allem darauf, wie schon angedeutet, daß der rückwärtige Bereich der Sitzunterseite mehr oder weniger von Zwischenelementen frei ist, die auch dann nicht stören, wenn sie beim Verschwenken des Sitzes in eine Schlafgelegenheit in die großen Freiräume hineinragen.

Nach einer weiteren Besonderheit der Erfindung erscheint es zweckmäßig, daß die gegenüber den Seiten des Sitzes zur Mitte hin versetzten Widerlagerplatten an einem von einem Rohr gebildeten Querträger angreifen, dem ein zweiter, nach unten und leicht nach rückwärts verlagerter, ebenfalls aus einem Rohr bestehender Querträger zugeordnet ist, der zusammen mit dem ersten Querträger und den Widerlagerplatten den oberen Teil des Sitzuntergestelles bildet, das von vorn oben leicht schräg nach unten rückwärts verläuft, also von der Seite gesehen einem nach vorn geneigten, der Sitzvorderkante zustrebenden Stützpfeiler gleicht. Durch die Anordnung eines zweiten Querträgers ergibt sich zunächst eine stabilere Konstruktion, die trotz eines zweiten Rohres nicht an Gewicht zunimmt, da bei einer Doppelanordnung an Stärke bzw. Material wesentlich eingespart werden kann. Der nach unten rückwärts gebildete Stützpfeiler hat zunächst den Vorteil, daß es beim Platznehmen auf dem neuen Sitz für die Füße kein Hindernis ergibt, ganz abgesehen davon, daß der nach vorn geneigte Stützpfeiler gut aussieht. Es versteht sich, daß die Neigung dieses Stützpfeilers so gewählt ist, daß er auch das Platznehmen der rückwärtigen Sitzbenutzer nicht behindert.

Bei Anordnung von zwei aus Rohren bestehenden Querträgern ist es auch denkbar, die Rohre als Verschiebewiderlager für die gangseitigen Sitze eines Sitzpaares zu verwenden, d.h., bei einem gangseitigen Sitz, z.B. in einem Omnibus, ist es zweckmäßig, wenn die Widerlagerplatten mit auf den Querträgern verschieb- und feststellbaren Hülsen in fester Verbindung stehen. Ob man die Hülsen über gleitfähige Kunststoffbuchsen oder über Kugeln oder auf andere Weise gleitfähig macht, ist eine Frage der Konstruktion bzw. des wirtschaftlichen Aufwandes. Gewährleistet muß auf jeden Fall sein, daß das Verschieben ohne großen Kraftaufwand möglich ist und Klappergeräusche nicht befürchtet werden müssen.

Ein besonders wichtiges Merkmal der Erfindung ist darin zu sehen, daß ein Zwischenelement zwischen den Widerlagerplatten und dem Sitz von einer nach unten offenen U-förmigen ersten Schwinge gebildet ist, die einen Teil des eigentlichen Sitzes selbst oder einen an der Sitzunterseite befestigten Zusatzteil darstellt, dessen vorderes Ende an einer Achse A der Widerlagerplatten drehbar angreift und das freie Ende der Schwinge drehbar über eine Achse B mit einer zwischen der U-Form liegenden Koppel verbunden ist, die unterhalb der Anlenklinie zwischen A und B mit einer nach oben offenen U-förmigen zweiten Schwinge über eine Achse C in scharniergelenkiger Verbindung steht, die unterhalb der Achse A mit einer Achse D an die Widerlagerplatten angelenkt ist und an dieser zweiten Schwinge die Rückenlehne starr angreift, wobei die zweite in die erste Schwinge von unten her eingreifende Schwinge im vorderen Bereich einen im wesentlichen nach oben strebenden Ausleger mit einem Achswiderlager L für zwei vorgespannte, rechts und links von der Längsachse des Sitzes angeordnete Druckfedern aufweist, deren zweite Widerlager von einer Achse K der Koppel gebildet sind, wobei die Achse K sich oberhalb der Achse B befindet. Eine solche Abstützung des ganzen Sitzes an den Widerlagerplatten hat zur Folge, daß ein Benutzer, wie auch sonst üblich, auf dem Sitz Platz nehmen kann, ohne daß irgendwelche Bewegungen erfolgen. Dies ist darauf zurückzuführen, daß durch die besondere Lage der Anlenkachsen A, B, C und D im Zusammenwirken mit den vorgespannten Druckfedern die ganze Anlenkung eine Totpunktlage einnimmt, die erst dann den Bewegungsmechanismus freigibt, wenn vom Sitzbenutzer die Rückenlehne nach rückwärts belastet wird. Bei der Belastung der Rückenlehne wird aber nicht nur die Rückenlehne verschwenkt, sondern auch der eigentliche Sitz im rückwärtigen Bereich etwas nach unten verlagert. Je nach Auslegung des durch die Achsen A, B, C und D entstandenen Führungsgetriebes ist es möglich, den eigentlichen Sitz z.B. um 10° und die Rückenlehne bis zu 25° in ihren Lagen zu verändern, wodurch sich bequeme Liegegelegenheiten schaffen lassen, ohne daß, wie schon angedeutet, die großen und ungefährlichen Freiräume für die Füße von rückwärts sitzenden Benutzern störend verringert werden. Da bei der Belastung der Rückenlehne die vorgespannten Druckfedern noch weiter gespannt werden, wird die Abfederung, je nach Lage der Anlenkachsen, härter oder auch weicher, die aber in Omnibussen kaum gefordert bzw. eher abgelehnt wird, so daß Bewegungssperren vorgesehen werden, auf die noch näher eingegangen wird. Das Zurückgleiten in die Ausgangsstellungen der beiden Sitzteile erfolgt durch die beiden vorgespannten Druckfedern, wenn man die Rückenlehne entlastet und eine ggf. vorhandene Feststellsperre gelöst hat.

Um zu vermeiden, daß die beiden Schwingen in wirkungslose Lagen geraten, ist vorgesehen, daß die Gelenkachsen A, B, C und D der beiden Schwingen und der Koppel derart angeordnet sind und mit den Federn zusammenwirken oder so unter dem Einfluß von Anschlägen stehen, daß die Achse C zwischen Koppel und der zweiten Schwinge in keiner Bewegungsphase eine gedachte Gerade zwischen den Achsen D und B nach oben zu überschreiten vermag.

Damit der erfindungsgemäße Sitz den jeweiligen Belastungsverhältnissen angepaßt werden kann, erscheint es zweckmäßig, daß zumindest eines der paarweise angeordneten Widerlager L, K auf der zweiten Schwinge und auf der Koppel, bevorzugt das Widerlager L auf der zweiten Schwinge in Richtung der vorgespannten Druckfedern lageveränderbar ist, indem der Ausleger schwenkbar an der zweiten Schwinge angreift und mit einer Schraube od. dgl. verstellbar ist.

Um das schon früher angesprochene und für Sitze in Omnibussen wesentliche Sperren aller Bewegungen zu erreichen und um ggf. auf die Federn Einfluß zu nehmen, besteht ein weiteres Merkmal der Erfindung darin, daß ein zwischen den Druckfedern liegendes Blockierelement in Form einer lös- und sperrbaren Gasfeder einmal an den Widerlagerplatten, z.B. an der Achse D angreift und zum anderen drehbar bei M an der Koppel angelenkt ist, wobei die Anlenkachsen C, B, K der Koppel in Seitenansicht unterschiedliche radiale Abstände zum Anlenkpunkt M aufweisen. Dabei spielen die erwähnten radialen Abstände nur insofern eine Rolle, als die Bewegungswege der einzelnen Achsen nicht behindert werden.

In der Zeichnung ist die Erfindung beispielsweise veranschaulicht; es zeigen:
- Fig. 1: einen Sitz für Omnibusse in Seitenansicht und in seiner Normalstellung;
- Fig. 2: den gleichen Sitz, in eine Liegegelegenheit verstellt;
- Fig. 3: die Anlenkmechanik mit ihren beiden Schwingen in Seitenansicht, in vereinfachter Schnittdarstellung, und
- Fig. 4: die Anlenkmechanik mit ihren beiden Schwingen von oben gesehen, teilweise aufgebrochen und zum besseren Verständnis der Funktion ebenfalls vereinfacht dargestellt.

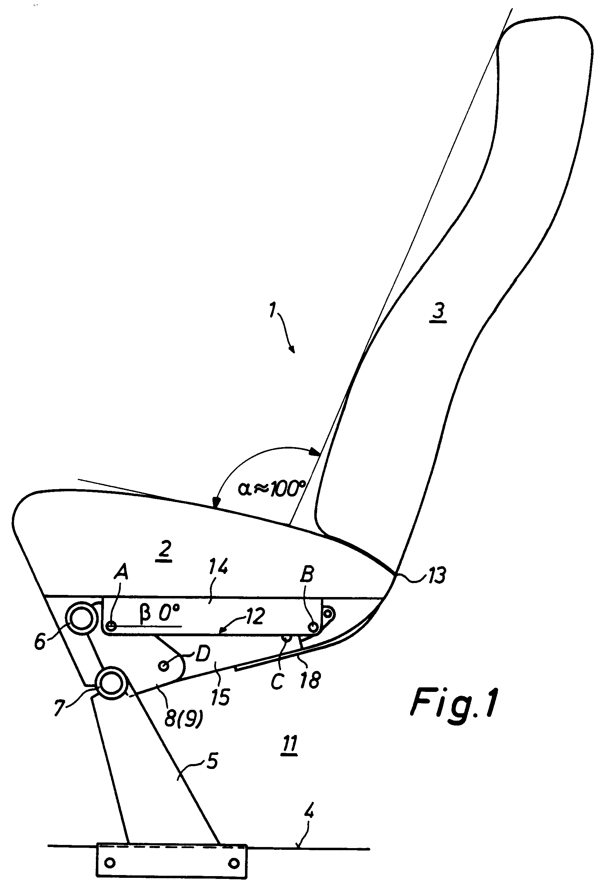

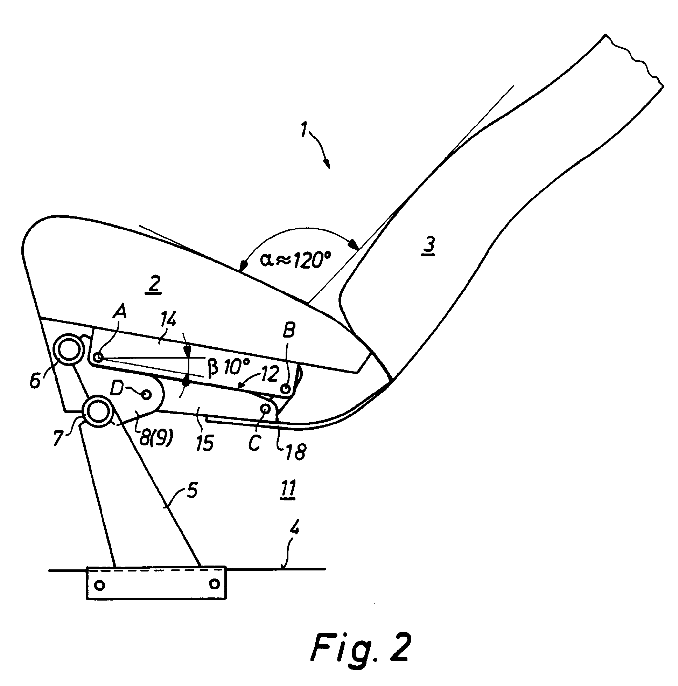

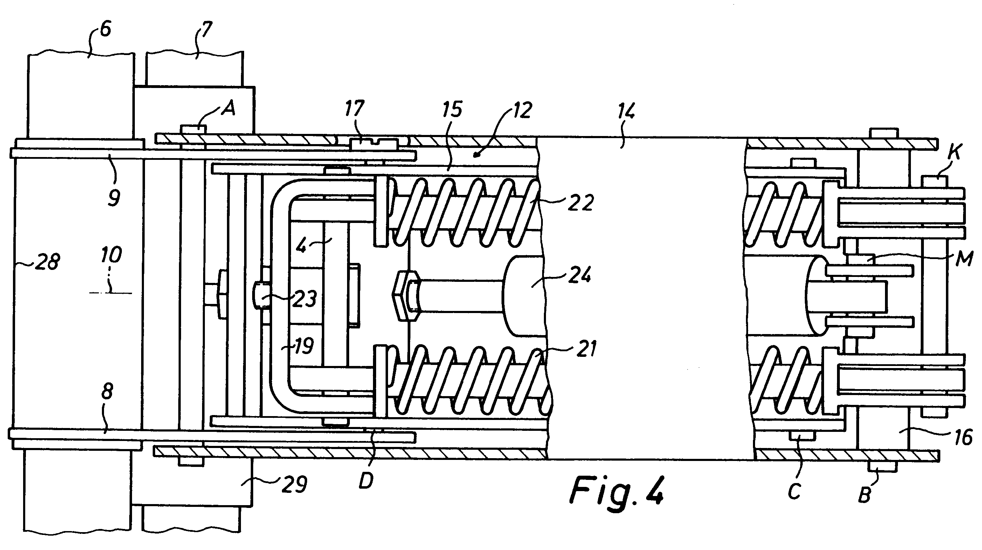

Gemäß den Figuren 1 und 2 besteht ein Sitz 1, der für den Einbau in Fahrzeuge, insbesondere in Omnibusse vorgesehen ist, im wesentlichen aus dem eigentlichen Sitz 2 und einer Rückenlehne 3. Gegenüber dem Boden 4 wird der Sitz 1 mit einem von vorn her teilweise abgedeckten Sitzuntergestell 5 abgestützt. Der obere Teil des Sitzuntergestelles wird von zwei Rohren 6, 7 und zwei voneinander beabstandeten Platten 8, 9 gebildet, die aber zur Mitte 10 hin nach innen versetzt sind, wie sich dies aus Figur 4 ergibt.

Damit man die Konstruktion von der Seite her gut erkennen kann, ist in den Figuren 1 und 2 das Sitzuntergestell nicht abgeblendet dargestellt.

Es versteht sich, daß man mit einem einzigen Rohr 6 auskommen könnte, jedoch würde dann ein seitliches Verschieben aus der Zeichenebene heraus erhebliche Schwierigkeiten bereiten, ganz abgesehen davon, daß sowohl das Rohr 6 als auch die Platten 8, 9 außerordentlich stark ausgeführt werden müßten, was ein untragbar hohes Mehrgewicht ergeben würde.

Besonders wichtig ist es, daß das Sitzuntergestell 5 bzw. sein Rohr 6 weit nach vorn gezogen ist, also den Sitz 1 im vordersten Bereich abstützt, so daß der untere rückwärtige Bereich des Sitzes 1 von störenden Befestigungsmitteln frei ist und große Freiräume 11 für die Beine eines rückwärts Sitzenden gegeben sind. Ebenso wichtig ist es, daß die Abstützmittel nicht nur nach vorn gerückt sind, sondern auch fließend in die Rückenlehne 3 übergehen und so sich keine Gefahrenquellen für rückwärts Sitzende ergeben.

Die Widerlagerplatten 8, 9 dienen als Abstützmittel, die zusammen mit 12 bezeichnet sind und die sowohl eine starre als auch eine gelenkige Verbindung zu dem Sitz 1 herstellen können. Wählt man eine starre Verbindung, ergibt sich das Bild nach Figur 1, d.h., gegenüber einer Horizontalen ist der Winkel β Null Grad und der Winkel α zwischen der Sitzfläche des eigentlichen Sitzes 2 und der Vorderseite der Rückenlehne 3 etwa 100 Grad. Eine Neigungsverstellung gegenüber der Horizontalen ist nicht möglich. eine Neigungsverstellung der Rückenlehne 3 wäre denkbar, wenn z.B. bei 13 ein Gelenk vorgesehen würde. Der große Freiraum 11 wird dadurch in keiner Weise behindert.

Die bevorzugte und hier besonders maßgebende Ausführung allerdings ergibt sich aus Figur 2, d.h., es ist eine gelenkige Abstützung, auf die noch näher eingegangen wird, vorgesehen, bei der nicht nur der eigentliche Sitz 2 im rückwärtigen Bereich abgesenkt wird, sondern auch gleichzeitig die Rückenlehne 3 eine andere Lage einnimmt. Wenn man bei dieser Bauart den eigentlichen Sitz 2 um den Winkel β mit 10 Grad neigt, ergibt sich zwischen dem eigentlichen Sitz 2 und der Rückenlehne ein Winkel α mit ungefähr 120 Grad. Dabei bleibt der glatte Übergang der Abstützmittel 12 in die Rückenlehne 3 vollkommen erhalten, während der Freiraum 11 etwas verkleinert wird, aber nur soweit, daß keine Behinderung der rückwärts Sitzenden eintritt. An den Figuren 1 und 2 ist klar zu erkennen, daß hier eine normale Sitzposition in eine Liegegelegenheit, die unter den Begriff "Schlafsessel" fällt, umgewandelt werden kann.

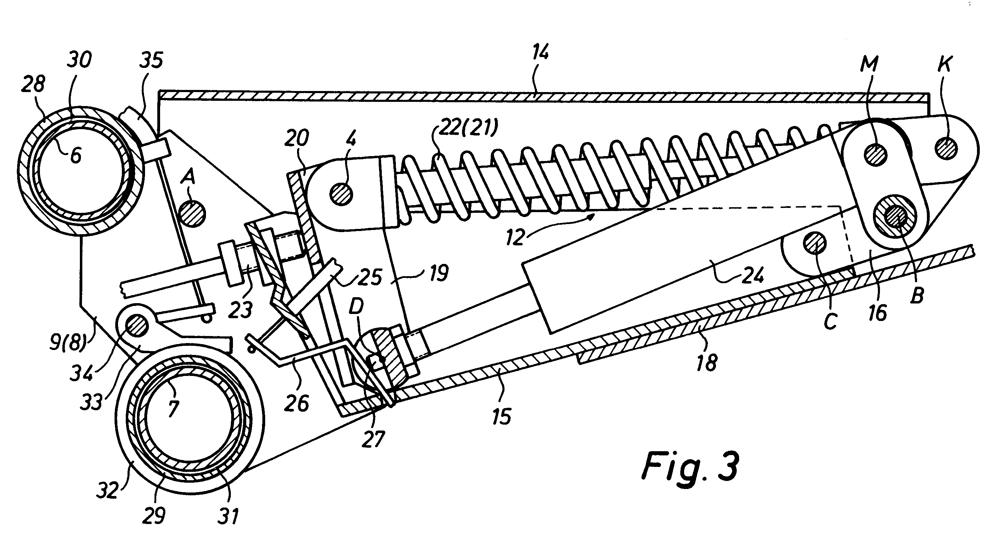

Die dazu erforderliche Konstruktion ergibt sich besonders gut aus den Figuren 3 und 4. Dort erkennt man, daß die Widerlagerplatten 8, 9 mit den Rohren 6, 7 in Verbindung stehen und die Abstützmittel bzw. die Zwischenelemente 12 im wesentlichen aus einer ersten U-förmigen, nach unten offenen Schwinge 14 und einer zweiten, mit ihrer nach oben offenen U-Form in die erste Schwinge 14 eingreifenden Schwinge 15 besteht.

Die Schwinge 14, die beim Ausführungsbeispiel mit der Unterseite des eigentlichen Sitzes 2 in fester Verbindung steht, ist auf einer Achse A der beiden Widerlagerplatten 8, 9 gelagert. Eine weitere Lagerachse B befindet sich am freien Ende der Schwinge 14 und sie dient einer Koppel 16 als Lagerachse, und diese Koppel 16 ist über eine Achse C mit der zweiten Schwinge 15 scharniergelenkig verbunden, wobei die Schwinge 15 auf eine in Figur 3 nur mit einem Punkt angedeuteten und in Figur 4 mit einer Befestigungsschraube 17 gekennzeichneten Achse D an die Widerlagerplatten 8, 9 angeschlossen ist. Hier ist noch zu erwähnen, daß die Achse C unterhalb einer gedachten Anlenklinie zwischen den Achsen A und B liegt und die Achse C außerdem mit ihrer Mittelachse sich leicht unter einer gedachten Geraden zwischen den Mittelachsen der Achsen D, B befindet.

Das erst im unteren Bereich sichtbare Tragegestell 18 der Rückenlehne 3 (vgl. die Figuren 1 bis 3) ist fest mit der Schwinge 15 verbunden. Die Schwinge 15 weist einen nach oben strebenden Ausleger 19 auf, der die Tiefe der Schwinge 15 nahezu ausfüllt und im oberen Bereich 20 eine weitere Achse bzw. ein Achswiderlager L aufweist, an dem zwei in sich geführte vorgespannte Druckfedern 21, 22 angreifen und ihr zweites Widerlager an einer Achse K der Koppel 16 finden, und zwar beiderseits der Mittelachse 10, wozu auf Figur 4 zu verweisen ist.

Wenn sich die Vorspannung der Federn 21, 22 verändern lassen soll, ist beim Ausführungsbeispiel der Ausleger 19 drehbar auf der Achse D gelagert und mit einer Schraube 23 verstellbar. Um den ganzen Mechanismus in jeder Stellung zu blockieren, ist ein. Blockierelement in Form einer Gasfeder 24 vorgesehen, die zwischen den Druckfedern 21, 22 liegt. Diese Gasfeder ist auf einer Achse M der Koppel 16 gelagert und gleichzeitig auf der Achse D. Daß hier eine besondere Konstruktion im Bereich der Achse D erforderlich ist, versteht sich von selbst, da sich die Achse der Gasfeder 24 und die Achse D nicht in einer Ebene schneiden dürfen. Die besondere Konstruktion ist hier vernachlässigt, vielmehr ist in Figur 3 veranschaulicht, wie man die Gasfeder 24 lösen und sperren kann, und zwar mit Hilfe eines Bowdenzuges 25, der über ein Hebelwerk 26 auf das Betätigungselement 27 der Gasfeder 24 einzuwirken vermag (vgl. Fig. 3).

Wenn der Sitz 1 auf den Rohren 6, 7 (vgl. insbesondere Fig. 3) verschoben werden soll, greifen die Widerlagerplatten 8, 9 nicht an den Rohren 6, 7, sondern an Buchsen 28, 29 an, die über Gleitbuchsen 30, 31 auf den Rohren 6, 7 gleitend gelagert sind. Mit 32 sind auf der Buchse 29 Nuten bildende Ringe bezeichnet, in welche ein Sperrhebel 33 eingreift, der auf einer zwischen den Widerlagerplatten 8, 9 befindlichen Achse 34 dreh- und feststellbar gelagert ist. Auch hier erfolgt die Betätigung mit einem Bowdenzug 35, was natürlich nicht ausschließt, daß man eine solche Sperre anders gestalten könnte. Die ab der Bezugszahl 24 aufgeführten Einzelheiten der Figur 3 sind in der Figur 4 bis auf die Schraube 23 unberücksichtigt geblieben.

Zur Funktion des beschriebenen und beispielsweise dargestellten Aufbaues sei folgendes bemerkt: Die Geometrie des Sitzes 1 bzw. der Zwischenelemente 12 ist so ausgelegt, daß in der Normalstellung des Sitzes 1 sich das Führungsgetriebe A, B, C, D in einer Art Totpunktstellung befindet, d.h., beim Platznehmen eines Benutzers findet keine Bewegung statt. Eine Bewegung ist erst dann möglich, wenn die gesperrte Gasfeder 24 gelöst und die Rückenlehne 3 vom Benutzer nach rückwärts belastet wird. Im dynamischen Gleichgewicht wird das Getriebe durch die Druckfedern 21, 22 gehalten. Durch die Änderung des Abstandes der Achsen L, K wird die Federkraft verändert, jedoch werden immer die Achsen L und K auseinandergedrückt, d.h., die Federkraft wirkt den Kräften auf die Rückenlehne 3 und auf den eigentlichen Sitz 1 stets entgegen. Wirkt eine Kraft auf die Rückenlehne 3, bewegt sich die Schwinge 15 nach unten und über die Koppel 16 wird auch der eigentliche Sitz 2 nach unten gezogen, d.h., das Getriebe A, B, C, D wird aus der Totpunktlage herausbewegt. Nach Überschreitung des Totpunktlagenbereiches werden die Kräfte auf die Rückenlehne 3 und auf den eigentlichen Sitz 2 von den Kräften der Druckfedern 21, 22 im Gleichgewicht gehalten. Durch die besondere Lage der Achsen A, B, C und D ergibt sich eine Übersetzung, so daß die aus den Figuren 1 und 2 ersichtlichen Winkelveränderungen eintreten. Durch Änderung der kinematischen Grundmaße des Getriebes A, B, C und D kann die Übersetzung geändert werden. Mit der Gasfeder 24 ist es möglich, den Sitz 1 in jeder Lage des Bewegungsbereiches zu arretieren, so daß es dem Benutzer des Sitzes 1 ein Leichtes ist, sich die für ihn bequemste Lage auszuwählen. Da bei der vorliegenden Konstruktion keine Verschiebelagerungen vorhanden sind und alle Teile ständig unter Federkraft stehen, sind weder bei Belastung noch bei Entlastung des Sitzes Klappergeräusche zu befürchten.

## Patentansprüche

1. Sitz, der einzeln oder paarweise in Reihen in Fahrzeugen, insbesondere in Omnibussen angeordnet ist und dessen eigentlicher Sitz mit seiner neigungsverstellbaren Rückenlehrte über Zwischenglieder auf einem quer zur Sitzrichtung verlaufenden, im vordersten Bereich des Sitzes (1) untergebrachten Querträger (6) eines im jeweiligen Fahrzeug verankerten Sitzuntergestelles aufgebaut ist, dadurch gekennzeichnet, daß der Querträger (6) des Sitzuntergestelles (5) als Anlenk- und/oder Abstützbasis für den nach rückwärts auskragenden Sitz (1) dient, indem der Querträger (6) zwei voneinander beabstandete, senkrecht stehende und symmetrisch zur Längsachse (10) des Sitzes (1) liegende Widerlagerplatten (8, 9) für Zwischenelemente (12) zum Sitz (1) trägt.

2. Sitz nach Anspruch 1, dadurch gekennzeichnet, daß die gegenüber den Seiten des Sitzes (1) zur Mitte (10) hin versetzten Widerlagerplatten (8, 9) an einem, Von einem Rohr gebildeten Querträger (6) angreifen, dem ein zweiter, nach unten und leicht nach rückwärts verlagerter, ebenfalls aus einem Rohr bestehender Querträger (7) zugeordnet ist, der zusammen mit dem ersten Querträger (6) und den Widerlagerplatten (8, 9) den oberen Teil des Sitzuntergestelles (5) bildet, das bevorzugt von vorn oben leicht schräg nach unten rückwärts verläuft, also von der Seite gesehen einem nach vorn geneigten, der Sitzvorderkante zustrebenden Stützpfeiler gleicht.

3. Sitz nach einem der Ansprüche 1 und 2, dadurch gekennzeichnet, daß bei einem gangseitigen Sitz (1), z.B. in einem Omnibus, die Widerlagerplatten (8, 9) mit auf den Querträgern (6, 7) verschieb- und feststellbaren Hülsen (28, 29) in fester Verbindung stehen.

4. Sitz nach einem der Ansprüche 1 bis 3, dadurch gekennzeichnet, daß ein Zwischenelement zwischen den Widerlagerplatten (8, 9) und dem Sitz (1) von einer nach unten offenen, U-förmigen ersten Schwinge (14) gebildet ist, die einen Teil des eigentlichen Sitzes (2) selbst oder einen an der Sitzunterseite befestigten Zusatzteil darstellt, dessen vorderes Ende an einer Achse (A) der Widerlagerplatten (8, 9) drehbar angreift und das freie Ende der Schwinge (14) drehbar über eine Achse (B) mit einer zwischen der U-Form liegenden Koppel (16) verbunden ist, die unterhalb der Anlenklinie (A zu B) mit einer nach oben offenen, U-förmigen zweiten Schwinge (15) über eine Achse (C) in scharniergelenkiger Verbindung steht, die unterhalb der Achse (A) mit einer Achse (D) an die Widerlagerplatten (8, 9) angelenkt ist und an dieser zweiten Schwinge (15) die Rückenlehne (3, 18) starr angreift, wobei die zweite in die erste Schwinge (14) von unten her eingreifende Schwinge (15) im vorderen Bereich einen im wesentlichen nach oben strebenden Ausleger (19) mit einem Achswiderlager (L) für zwei vorgespannte, rechts und links von der Längsachse (10) des Sitzes (1) angeordnete Druckfedern (21, 22) aufweist, deren zweite Widerlager von einer Achse (K) der Koppel (16) gebildet sind, wobei die Achse (K) sich oberhalb der Achse (B) befindet.

5. Sitz nach einem der Ansprüche 1 bis 4, dadurch gekennzeichnet, daß die Gelenkachsen (A, B, C und D) der beiden Schwingen (14, 15) und der Koppel (16) derart angeordnet sind und mit den Federn (21, 22) zusammenwirken, oder so unter dem Einfluß von Anschlägen, Sperrelementen od. dgl. stehen, daß die Achse (C) zwischen Koppel (16) und der zweiten Schwinge (15) in keiner Bewegungsphase eine gedachte Gerade zwischen den Achsen (D) und (B) nach oben zu überschreiten vermag.

6. Sitz nach einem der Ansprüche 1 bis 5, dadurch gekennzeichnet, daß zumindest eines der paarweise angeordneten Widerlager (L, K) auf der zweiten Schwinge (15) und auf der Koppel (16), bevorzugt das Widerlager (L) auf der zweiten Schwinge (15) in Richtung der vorgespannten Druckfedern (21, 22) lageveränderbar ist, indem der Ausleger (19) schwenkbar an der zweiten Schwinge (15) angreift und mit einer Schraube (23) od. dgl. verstellbar ist.

7. Sitz nach einem der Ansprüche 1 bis 6, dadurch gekennzeichnet, daß ein zwischen den Druckfedern (21, 22) liegendes Blockierelement in Form einer lös- und sperrbaren Gasfeder (24) einmal an den Widerlagerplatten (8, 9), z.B. an der Achse (D) angreift und zum anderen drehbar (bei M) an der Koppel (16) angelenkt ist, wobei die Anlenkachsen (C, B, K) der Koppel (16) in Seitenansicht unterschiedliche radiale Abstände zum Anlenkpunkt (M) aufweisen.

## Claims

1. Seat which is arranged singly or pairwise in rows in vehicles, particular in omnibuses, and the actual seat of which together with its rake-adjustable backrest is mounted by way of intermediate members on a crossbeam (6), which extends transversely to the seat direction and is accommodated in the foremost region of the seat (1), of a seat subframe anchored in the respective vehicle, characterised thereby that the crossbeam (6) of the seat subframe (5) serves as pivot and/or support base for the rearwardly jutting seat (1), in that the crossbeam (6) carries two mutually spaced-apart vertically disposed support plates (8, 9), which lie symmetrically of the longitudinal axis (10) of the seat (1), for intermediate elements (12) at the seat (1).

2. Seat according to claim 1, characterised thereby that the support plates (8, 9), which are offset towards the middle (10) relative to the sides of the seat (1), engage at a crossbeam (6) which is formed by a tube and which is associated with a second crossbeam (7), which is displaced downwardly and slightly rearwardly, similarly consists of a tube and together with the first crossbeam (6) and the support plates (8, 9) forms the upper part of the seat subframe (5), which preferably extends slightly obliquely from the front above downwardly to the rear, thus seen from the side resembles a forwardly inclined support column aimed at the seat front edge.

3. Seat according to one of claims 1 and 2, characterised thereby that in the case of a seat (1) at the side of a gangway, for example in a bus, the support plates (8, 9) are in fixed connection with sleeves (28, 29) displaceable and fixable on the crossbeams (6, 7).

4. Seat according to one of claims 1 to 3, characterised thereby that an intermediate element between the support plates (8, 9) and the seat (1) is formed by a downwardly open U-shaped first rocker (14), which represents a part of the actual seat (2) itself or an additional part fastened to the seat underside and the front end of which rotatably engages at an axle (A) of the support plates (8, 9), and the free end of the rocker (14) is rotatably connected by way of an axle (B) with a coupler (16), which is disposed between the U-shape and which below the pivot line (A to B) stands in hinge-articulated connection by way of an axle(C) with an upwardly open U-shaped second rocker (15), which below the axle (A) is articulated to an axle (D) at the support plates (8, 9), and the backrest (3, 18) rigidly engages at this second rocker (15), wherein the second rocker (15), which engages from below in the first rocker (14) has in the front region a substantially upwardly directed arm (19) with an axle support (L) for two biassed compression springs (21, 22) arranged to the right and left of the longitudinal axis (10) of the seat (1), the second support of which springs is formed by an axle (K) of the coupler (16), wherein the axle (K) is disposed above the axle (B).

5. Seat according to one of claims 1 to 4, characterised thereby that the pivot axles (A, B, C and D) of the two rockers (14, 15) and the coupler (16) are arranged in such a manner and co-operate with the springs (21, 22), or are so disposed under the influence of stops, blocking elements or the like, that the axle (C) between coupler (16) and the second rocker (15) may not go upwardly beyond a notional line between the axles (D) and (B) in any movement phase.

6. Seat according to one of claims 1 to 5, characterised thereby that at least one of the supports (L, K), arranged pairwise, on the second rocker (15) and on the coupler (16), preferably the counterbearing (L) on the second rocker (15), is variable in position in direction of the biassed compression springs (21, 22), in that the arm (19) pivotably engages at the second rocker (15) and is displaceable by a screw (23) or the like.

7. Seat according to one of claims 1 to 6, characterised thereby, that a blocking element, which is disposed between the compression springs (21, 22) and is in the form of a releasable and lockable gas spring strut (24), on the one hand engages at the support plates (8, 9), for example at the axle (D) and on the other hand is rotatably articulated (at M) to the coupler (16), wherein the pivot axles (C, B, K) of the coupler (16) have in side view different radial spacings from the pivot fulcrum (M)

## Revendications

1. Siège qui est disposé, séparément ou par paire en rangée, dans des véhicules, en particulier, dans des omnibus, et dont le siège proprement dit avec son dossier réglable en inclinaison est monté au moyen d'organes intermédiaires sur une traverse (6), logée le plus à l'avant du siège (1), qui s'étend transversalement au sens de l'assise et qui fait partie d'une sous-carcasse de siège ancrée dans le véhicule considéré, caractérisé en ce que la traverse (6) de la sous-carcasse de siège (5) sert de base de support et/ou d'articulation pour le siège (1) en porte-à-faux vers l'arrière, auquel cas la traverse (6) porte, pour des éléments (12) intercalés au siège (1), deux plaques de contre-appui (8, 9), à distance l'une de l'autre, perpendiculaires et symétriques à l'axe longitudinal (10) du siège (1).

2. Siège selon la revendication 1, caractérisé en ce que les plaques de contre-appui (8, 9) décalées vers le milieu (10) par rapport aux côtés du siège (1) s'appliquent contre une traverse (6) formée par un tube et associée à une seconde traverse (7) constituée également par un tube et décalée vers le bas et légèrement vers l'arrière qui forme, avec la première traverse (6) et les plaques de contre-appui (8, 9), la partie supérieure de la sous-carcasse de siège (5) qui, de préférence, s'étend de l'avant vers l'arrière en haut légèrement inclinée vers le bas et qui, donc vue de côté, ressemble à un pilier de support incliné vers l'avant en direction du bord avant du siège.

3. Siège selon l'une des revendications 1 et 2, caractérisé en ce que dans le cas d'un siège (1), côté couloir, par exemple dans un omnibus, les plaques de contre-appui (8, 9) sont reliées fixement aux manchons (28, 29) réglables et coulissants sur les traverses (6, 7).

4. Siège selon l'une des revendications 1 à 3, caractérisé en ce qu'un élément intercalaire entre les plaques de contre-appui (8, 9) et le siège (1) est formé par une première coulisse oscillante (14), en forme de U ouvert vers le bas, qui représente une partie du siège (2) proprement dite ou une partie supplémentaire fixée à la face inférieure du siège, dont l'extrémité avant est amenée en rotation autour d'un axe (A) des plaques de contre-appui (8, 9) et l'extrémité libre de la coulisse oscillante (14) est reliée, de manière rotative par l'intermédiaire d'un axe (B), à une bielle (16) qui est située dans la forme en U, qui est reliée activement par articulation de charnière, en dessous de la ligne d'articulation (A à B) au moyen d'un axe (C), à une seconde coulisse oscillante (15) en forme de U ouvert vers le bas, bielle qui est articulée en dessous de l'axe (A) sur les plaques de contre-appui (8, 9) par un axe (D) et qui entre en contact rigide, au niveau de cette seconde coulisse oscillante (15), avec le dossier (3, 18), auquel cas la seconde coulisse (15), s'engageant par le bas dans la première coulisse (14), présente, dans la zone avant, un bras (19) essentiellement dirigé vers le haut avec un contre-appui d'axe (L) pour deux ressorts à pression (21, 22) précontraints et disposés à droite et à gauche de l'axe longitudinal (10) du siège (1), ressorts dont le second contre-appui est formé par un axe (K) de la bielle (16), l'axe (K) se trouvant au-dessus de l'axe (B).

5. Siège selon l'une des revendications 1 à 4, caractérisé en ce que les axes d'articulation (A, B, C et D) des deux coulisses oscillantes (14, 15) et de la bielle (16) sont disposés et coopérent avec les ressorts (21, 22) ou bien subissent l'influence de butées, d'éléments de blocage ou similaires, de sorte que, dans aucune phase de mouvement, l'axe (C) entre la bielle (16) et la seconde coulisse oscillante (15) ne peut aller vers le haut au-delà d'une droite imaginaire entre les axes (D) et (B).

6. Siège selon l'une des revendications 1 à 5, caractérisé en ce qu'au moins l'un des contre-appuis disposés par paire (L, K) peut changer de position sur la seconde coulisse oscillante (15) et sur la bielle (16), de préférence le contre-appui (L) sur la seconde coulisse oscillante (15), en direction des ressorts de pression précontraints (21, 22), le bras (19) intervenant par pivotement au niveau de la seconde coulisse oscillante (15) et étant réglable au moyen d'une vis (23) ou similaire.

7. Siège selon l'une des revendications 1 à 6, caractérisé en ce qu'un élément d'arrêt se trouvant entre les ressorts de pression (21, 22) sous forme d'un ressort à gaz (24) blocable et déblocable intervient, d'une part, au niveau des plaques de contre-appui (8, 9), par exemple au niveau de l'axe (D) et, d'autre part, est articulé de manière rotative (en M) à la bielle (16), les axes d'articulation (C, B, K) de la bielle (16) présentant, en vue latérale, des distances radiales différentes par rapport au point d'articulation (M).
